# EUROPEAN PATENT APPLICATION

(11) **EP 4 696 505 A1**
(43) Date of publication of application: **18.02.2026**
(21) Application number: 24194058.4
(22) Date of filing: 12.08.2024
(51) Int. Cl.: B32B 17/10

(54) **REPLACING CERAMIC PRINT FOR IMPROVED GLASS RECYCLING**

(71) Applicant: Kuraray Europe GmbH, 65795 Hattersheim (DE)
(72) Inventor: Keller, Uwe, 77210 Avon (FR)
(74) Representative: Janßen, Christian Oliver

(57) **Abstract**

The invention is directed to a method to manufacture laminated glazing having an obscuration frame at the outer areas of the laminated glazing by combining two sheets of glass with an interlayer film comprising at least one film A containing a polyvinyl acetal PA and at least one film B containing a polyvinyl acetal PB and at least one plasticiser WB, wherein film A has the shape of the obscuration frame **characterised in that**
a) a film A' having at least the surface area and shape of film B is provided wherein at least one surface of film A' is entirely provided with the optical properties of the obscuration frame
b) cutting film A' at least into the inner shape of the obscuration frame thus obtaining film A
c) combining film A and film B into the interlayer film
d) combining two sheets of glass with the thus obtained interlayer film.

## Description

The invention is directed to provide laminated glazing with a obscuration frame without the need of ceramic prints on the glass, thereby enabling recycling of the glass.

### BACKGROUND

Laminated automotive glazing parts such as windshield, laminated side and back lights or roof lights, are typically composed of 10% of PVB interlayer and 90% of glass by weight. With a carbon footprint of float glass used in automotive glazing of about 1.2 kg/kg, and 4.5 kg/kg for the typical PVB interlayer. According to this, the share of carbon footprint from glass in a windshield can easily amount to more than 75%.

To recover the glass and PVB end-of-life, one common approach is "crush and sort". The omnipresent black ceramic print on automotive glazing parts, however, strongly complicates the reuse of the glass fragments for the same application, since even minor amounts of ceramic print impair the optical quality of newly generated float glass when using contaminated cullet from scrapped windshields for example.

Windshields and other laminated automotive glazing parts come in many different shapes and sizes. Completely replacing black ceramic print by a black print on a PVB interlayer has therefore been proposed for example in WO 2019/121535, WO2019038043A1 or WO2022063962, but not implemented due to challenges going with unusually large print dimensions and at the same time strict requirements towards print color, optical density, shape fidelity and a multitude of individual print designs, each of which requiring new printing tools, stock keeping and so forth. Obviously, all of this with a big impact on cost. Moreover, precisely aligning the outer edges of a printed sheet with the edges of the glass sheets and avoiding wrinkling and other complications during assembly has effectively prevented use as a replacement option.

### OBJECT OF THE INVENTION

Accordingly, there was a need to provide laminated glazing with a obscuration frame without the need of ceramic prints on the glass, thereby enabling recycling of the glass.

Object of the invention is a method to manufacture laminated glazing having an obscuration frame at the outer areas of the laminated glazing by combining two sheets of glass with an interlayer film comprising at least one film A containing a polyvinyl acetal PA and at least one film B containing a polyvinyl acetal PB and at least one plasticiser WB, wherein film A has the shape of the obscuration frame **characterised in that**
a) a film A' having at least the surface area and shape of film B is provided wherein at least one surface of film A' is entirely provided with the optical properties of the obscuration frame
b) cutting film A' at least into the inner shape of the obscuration frame thus obtaining film A
c) combining film A and film B into the interlayer film
d) combining two sheets of glass with the thus obtained interlayer film.

The term "obscuration frame" refers to a frame-shaped region of the laminated glazing. The frame-shaped region is located at all four of the outer edges of the laminated glazing and has a width towards the inner area of the laminated glazing of about 1 to 40 cm.

The optical properties of the "obscuration frame" can be defined as light transmission in the visible spectrum of less than 5%, preferably less than 1%, more preferably less than 0.1% and most preferably less than 0.05%.

When crushing and shredding laminated glass manufactured according to the invention, the entirety of a glass pane can be recovered in form of fragments free of any contaminating residues of black ceramic print. The black pigment from the thin film stays entrapped in the shredded interlayer pieces which are easily separatable from the heavier glass fragments.

Opposite to the above, in the case of windshields according to the state of the art, a very significant portion, in which the glass surface is covered with ceramic print, needs to be mechanically stamped away before shredding, is discarded and typically send to landfill.

### BRIEF DESRIPTION OF THE DARWINGS

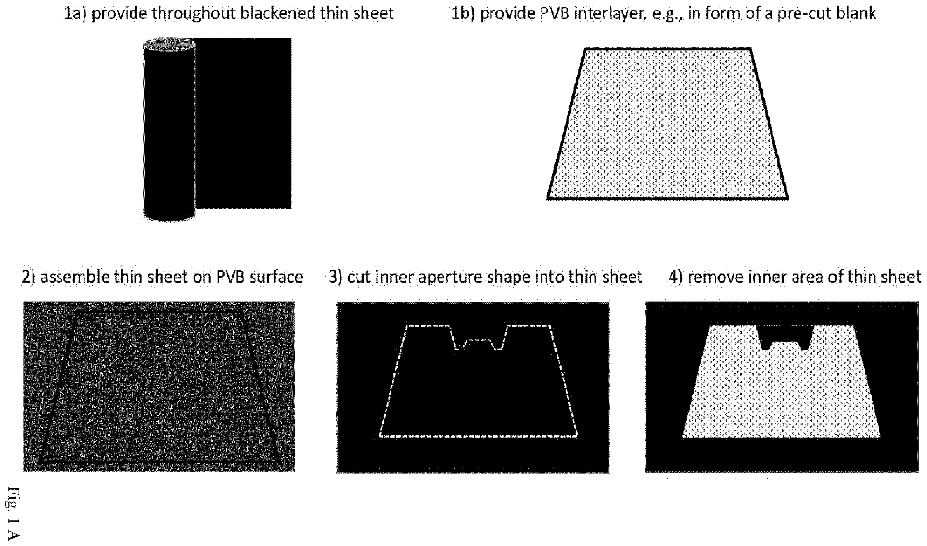

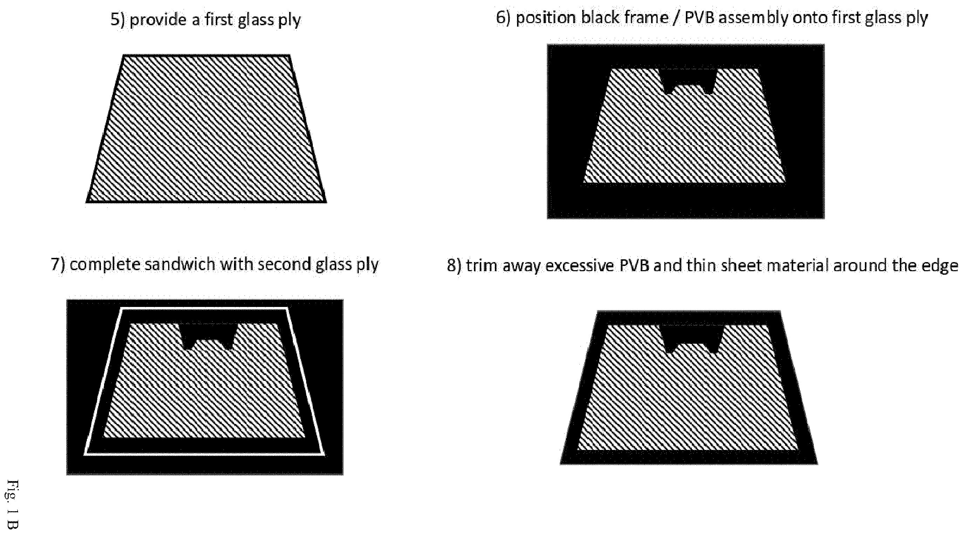

Fig. 1 A and B show an embodiment of the method of the invention.

### DETAILED DESCRIPTION

In the method of the invention, a full area blackened thin film (roll, sheet) may be provided in sufficient width and length to cover the entire area of the glass sheets.
A) The black thin film is affixed on the surface of the regular PVB sheet, e.g. by a prelamination step, by interwinding, and so forth. Followed by cutting the aperture area and optionally other features in the black thin film free after combining with the regular PVB, which supports it and helps avoid deformation and wrinkling during the lay-up step.
B) The inner shape of the desired aperture is cut away from the black thin film first. A carrier sheet is used to transfer the residual frame and optionally other areas and affix on the PVB prior lamination. The carrier sheet is removed prior lamination.

In a first embodiment of the method, after step a), film A' and film B are combined into the interlayer film and then step b) is performed. In this embodiment, Film A' is cut while placed on film B wherein the cut-away areas of film A' are removed.

In a second embodiment, after step a), step b) is performed and the thus obtained film A' is combined with film B into the interlayer film, which is then combined with the two sheets of glass. In other words, film A is produced independently from film B.

In a variant of this embodiment, a transfer film for example PET, PP in a thickness of 30, 50, 75 or 100 µm is used to ease handling of films A and A'. Here, after step a), film A' is provided or placed on a transfer film, then step b) is performed; the thus obtained film A is combined with the transfer film and film B into the interlayer film and wherein the transfer film is removed before combining the two sheets of glass with the interlayer film.

In both embodiments, the transparent aperture for the individual glazing part can be generated by cutting around the desired edge of the outer black band and removing the inner area of the black thin film.

At the same time, features like black ADAS and mirror mount area, including the cut-outs for sensors and cameras can be generated in the same cutting operation. In addition, "islands" of black film, separated from the black frame portion, can be generated, for example to mask a separated mirror mount or rain sensor area. Other features like a window for the vehicle identification number or decorative structures can be produced in the cutting operation. Also certain parts can be entirely removed from the edge to provide an interruption in the frame if desired. Cutting may be done by blade cutting (like available cutting tables from Zünd), die cutting, laser cutting or stamping. Cutting is preferably done in the form of so called "kiss-cut", by which the black thin film layer is completely cut, but the underlying regular PVB or the carrier sheet is essentially not cut through but superficially cut at the most.

At least one or both surfaces of Film A' and after step b), film A are entirely provided with the optical properties of the obscuration frame. This can be achieved by either by coating or printing and/or by bulk dyeing. Since the whole surface area of film A/A' can be provided with the optical properties of the obscuration frame, no special printing or coating equipment is necessary. The term "bulk dyeing" refers to a process wherein a mixture of the PVB and the dye (or pigments) is shaped into film A'. Typical shaping processes for PVB and dye mixtures are extrusion casting, solvent casting and film melt blowing.

As dye for printing, coating of bulk-dying any inorganic or organic pigment can be used which does not dissolve in the polymer matrix and thus resist migration from film A to B. As pigments, preferably carbon black, iron oxides, titanium oxide, zinc oxide, polyaniline, perylenes or spinel pigments and titanium dioxide are used. The pigments may be dispersed in a carrier fluid like water, alcohol or mixtures of alcohol and water. Furthermore, binders like polyvinylalcohol, polyvinylbutyral, polyvinylpyrrolidone, polyacrylates, polyurethanes or poly styrene-acrylate may be present. The color of the pigments and later on the obscuration frame is not of particular importance and can be any color like white, grey, brown etc.. However, black is preferred.

Water-based printing inks are preferred over printing inks based on organic solvents since they do not swell or dissolve the film A and/or lead to film defects. Printing inks based on organic solvents can be used if the coating is thin and/or the drying step is fast such that the solvent does not migrate into the PVB film. It is beneficial to use a low molecular weight PVB as binder for the printing inks since it ensures good compatibility with the PVB containing films A and B.

The printing inks can be applied via techniques that are commonly known in the printing industry such as offset printing, rotogravure printing, flexography, and screen-printing, followed usually by a drying step. Typically, the dried ink layer thicknesses of 1 - 15 µm, preferably 2-12 µm, more preferably 4-10 µm and most preferably 5 - 9 µm are sufficient to obtain low enough visible light transmission properties.

In case one or both surfaces of film A' are provided by bulk dying of the whole material of film A', the same dyes or pigments as for the coating/printing process can be used.

In modem cars, various optical detection devices are positioned on the inside of the car behind the windshield. Optical detection devices are chosen from digital cameras, range finders, haze meters, rain sensors, target detectors, scanning laser devices (LIDAR) or related devices using electromagnetic radiation from within the UV/VIS and NIR/IR range of the spectrum. In the context of this invention, the area of the windshield which is used by the optical detection device is denoted "transparent detection area". The term "transparent" shall be understood that the detection area has the same transparency as film B.

Therefore, in another embodiment of the invention the obscuration frame is provided with transparent areas for sensors or cameras and wherein the transparent areas are cut out of film A' in step b).

### Film A

As Film A is produced from Film A' in step b) for example by cutting, the composition of Film A and Film A' is identical. Accordingly, all properties hereinafter disclosed for Film A apply for Film A' likewise.

The thickness of film A' and later on A (both prior to lamination with film B) is 5 - 150 µm, preferably 10 - 100 µm, preferably 15 - 50 µm and most preferably 20 - 35 µm

Film A' and later on A can also have at least one textured surface with a surface roughness Rz in a range of 0 - 10 µm, preferably in a range of 1 - 8 µm and most preferably in a range of 2 - 5 µm.

Film A' and A is produced separately from film B (for example extruded or solvent cast) and has either no plasticiser at all or sufficiently small proportion of plasticiser so that subsequent processing is not adversely influenced.

Hereinafter, the term "prior to lamination" refers to the state of the films A (A') and B prior to having any contact to each other. For example, the term refers to the composition of each film separately formed and separately wound to individual rolls. The term "prior to lamination" refers to the state for the layers or films before combining them either in the lamination process of the laminated glass or prior to building a stack from the layers used for lamination.

Films A used in accordance with the invention may contain, in the starting state prior to lamination, less than 15 % by weight, less than 10 % by weight, less than 4 % by weight, less than 2 % by weight, less than 1 % by weight or even no plasticiser (0.0 % by weight). In a preferred embodiment of the invention, films A with a low plasticiser content preferably contain 0.0 - 8 % by weight of plasticiser, most preferred 0 - 4 wght %.

### Film B

Film B may be any plasticized PVB-film known in the art. The films A and B may contain, in the starting state prior to lamination and/or in a stack prepared for lamination between glass sheets, a single plasticiser as well as mixtures of plasticisers both of different and identical composition. The term "different composition" refers to both the type of plasticiser and proportion thereof in the mixture. Film A and film B after lamination, i.e. in the finished laminated glass, preferably have the same plasticisers WA and WB. In a preferred variant, film A in its starting state, however, does not contain any plasticiser and after lamination contains plasticiser WB in equilibrium amount.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 µm, preferably 600 - 1000 µm, preferably 700 - 900 µm. A plurality of films B may be used in the invention, either being stacked on each other or separated by films A. Film B may also have a wedged thickness profile with a higher thickness for the top or bottom edge of a windshield.

### Polyvinyl Acetal

The films A and B used in accordance with the invention contain polyvinyl acetals, which are produced by acetalisation of polyvinyl alcohol or ethylene vinyl alcohol copolymer.

The films can contain polyvinyl acetals, each having a different polyvinyl alcohol content, degree of acetalisation, residual acetate content, ethylene proportion, molecular weight and/or different chain lengths of the aldehyde of the acetal groups.

In particular, the aldehydes or keto compounds used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinyl acetal used in accordance with the invention results in particular from the reaction of at least one polyvinyl alcohol with one or more aliphatic unbranched keto-compounds containing 2 to 10 carbon atoms. To this end, n-butyraldehyde is preferably used. The polyvinyl alcohols or ethylene vinyl alcohol copolymers used to produce the polyvinyl acetals in the films A or B may be identical or different, pure or a mixture of polyvinyl alcohols or ethylene vinyl alcohol copolymers with different degree of polymerisation or degree of hydrolysis.

The polyvinyl acetate content of the polyvinyl acetals in the films A or B can be set by use of a polyvinyl alcohol or ethylene vinyl alcohol copolymer saponified to an appropriate degree. The polarity of the polyvinyl acetal is influenced by the polyvinyl acetate content, whereby the plasticiser compatibility and the mechanical strength of the respective layer also change. It is also possible to carry out the acetalisation of the polyvinyl alcohols or ethylene vinyl alcohol copolymers with a mixture of a number of aldehydes or keto compounds.

The films A or B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 24 % by weight or 10 - 16 % by weight.

Independent of film A, the polyvinyl alcohol content of the polyvinyl acetals PB used in film B may be between 14 - 26 % by weight, 16 - 24 % by weight, 17 - 23 % by weight and preferably between 18 and 21 % by weight.

In a preferred embodiment of the invention, film A comprises a polyvinyl acetal PA with a proportion of vinyl alcohol groups from 6 to 26 % by weight and the film B comprises a polyvinyl acetal B with a proportion of vinyl alcohol groups from 14 to 26 % by weight. The vinyl alcohol content and vinyl acetate content were determined in accordance with DIN ISO 3681 (Acetate content) and DIN ISO 53240 (PVA content). The vinyl acetal content is calculated as the remaining portion from the sum of vinyl alcohol content and vinyl acetate content determined in accordance with DIN ISO 53401/53240.

The films A or B preferably contain uncross-linked polyvinyl acetal. The use of cross-linked polyvinyl acetals is also possible. Methods for cross-linking polyvinyl acetals are described, for example, in EP 1527107 B1 and WO 2004/063231 A1 (thermal self-cross-linking of polyvinyl acetals containing carboxyl groups), EP 1606325 A1 (polyvinyl acetals cross-linked with polyaldehydes) and WO 03/020776 A1 (polyvinyl acetal cross-linked with glyoxylic acid).

### Plasticizer

Films A and/or B used in accordance with the invention may contain, as plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

Films A in the variants in which a plasticiser WA is present in film A in the starting state, and also films B particularly preferably contain 1,2-cyclohexane dicarboxylic acid diisononyl ester (DINCH) or triethylene glycol-bis-2-ethyl hexanoate (3GO or 3G8) as plasticiser.

Film B may consist of at least two sub-films B' and B", which have a different plasticiser content.

In addition, films A and B may contain further additives, such as alkaline or alkaline earth metal salts residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

Generally, film A is combined with film B and optionally any other films in the preferred orientation and subsequently, the windshields are produced by a lamination process known in the art. Examples of the lamination process as well as the techniques to apply the obscuration area to film A are also known in the art and can be found inter alia in WO 2019/121535 and WO 2019/038043.

Cutting film A can be performed by any conventional techniques of cutting PVB films, e.g. by cutting with a blade, a die, a wheel or a laser.

## Claims

1. Method to manufacture laminated glazing having an obscuration frame at the outer areas of the laminated glazing by combining two sheets of glass with an interlayer film comprising at least one film A containing a polyvinyl acetal PA and at least one film B containing a polyvinyl acetal PB and at least one plasticiser WB, wherein film A has the shape of the obscuration frame **characterised in that**
a) a film A' having at least the surface area and shape of film B is provided wherein at least one surface of film A' is entirely provided with the optical properties of the obscuration frame
b) cutting film A' at least into the inner shape of the obscuration frame thus obtaining film A
c) combining films A and film B into the interlayer film
d) combining two sheets of glass with the thus obtained interlayer film

2. Method according to claim 1 **characterised in that** after step a), film A' and film B are combined into the interlayer film and then step b) is performed.

3. Method according to claim 1 **characterised in that** after step a), film A' is provided on a transfer film, then step b) is performed; the thus obtained film A' is combined with the transfer film and film B into the interlayer film and wherein the transfer film is removed before combining the two sheets of glass with the interlayer film.

4. Method according to claim 1 **characterised in that** after step a), step b) is performed and the thus obtained film A is combined with film B into the interlayer film, which is then combined with the two sheets of glass.

5. Method according to an of claims 1 to 4 **characterised in that** at least one surface of film A' is entirely provided with the optical properties of the obscuration frame by coating or printing.

6. Method according to an of claims 1 to 4 **characterised in that** the at least one surface of film A' is entirely provided with the optical properties of the obscuration frame by bulk dyeing film A'.

7. Method according to an of claims 1 to 6 **characterised in that** step b) is performed by blade cutting, die cutting, laser cutting or stamping.

8. Method according to an of claims 1 to 7 **characterised in that** the obscuration frame is provided with transparent areas for sensors or cameras and wherein the transparent areas are cut out of film A' in step b).

9. Method according to an of claims 1 to 8 **characterised in** cutting film A and/or film A' into the outer shape of the laminated glazing.

10. Method according to an of claims 1 to 9 **characterised in that *the obscuration frame*** has a light transmission in the visible spectrum of less than 5%.

11. The windshield according to any of the claims 1 to 10, **characterised in that,** prior to combining the two glass sheets, the amount of plasticiser WA in film A is less than 15 % by weight and the amount of plasticiser WB in film B is at least 22 % by weight.
